# EUROPEAN PATENT APPLICATION

(11) **EP 2 736 031 A1**
(43) Date of publication of application: **28.05.2014**
(21) Application number: 13191578.7
(22) Date of filing: 05.11.2013
(51) Int. Cl.: G09B 29/00

(54) **In-door map server**

(30) Priority: 23.11.2012 KR 20120133357
(71) Applicant: Hyundai Mnsoft, Inc., Seoul 140-711 (KR)
(72) Inventor: Lee, Seok Ho, 140-711 Seoul (KR); Yang, Hyun Jong, 140-711 Seoul (KR)
(74) Representative: Viering, Jentschura & Partner Patent- und Rechtsanwälte

(57) **Abstract**

A server for storing an indoor map, the server comprising: a first storage area configured to store network data, the network data including node data and link data that constitute a building; and a second storage area configured to store floor data, the floor data including space data representing logical division space for each floor and geometry data representing a physical separation space.

## Description

### Related Applications

This application claims the benefit of Korean Patent Application No. 10-2012-0133357, filed on November 23, 2012, which is hereby incorporated by reference as if fully set forth herein.

### Field of the Invention

The present invention relates to an indoor map server for storing an indoor map, and more particularly, to a technology of storing an indoor map in an indoor map server so that the indoor map can be rapidly provided in response to a request of the indoor map from a user terminal.

### Background of the Invention

Typically, a route guidance service is provided from a map providing server to terminals. To be more specific, a map providing server stores numerical map information that is digitized and provides map data to terminals via a wireless network. Each of the terminals stores map data that is downloaded from the map providing server and visually guides an optimal route up to a destination through the use of the stored map data. In other words, the terminal stores numerical map data in which information about real roads, buildings, facilities and the like is digitized in a given format and matches location information, which is supplied from a GPS (Global Positioning System) receiver or a device capable of measuring the location of the terminal, to the pre-stored map data to guide a virtual moving body along an optimal route to a destination through a screen of the terminal.

Korean Laid-Open Patent Publication No. 10-2008-0072668, which is published on August 06, 2008, entitled, "SCHEMATIC DESTINATION MAPS," discloses a system and a machine-implemented system that facilitate to provide directions to a destination related to geography and a system and a machine-implemented system that facilitate to create a map. It provides a system that facilitates automatically creating an enhanced schematic destination map to provide directions to a destination related to geography. In the system, an interface component may receive at least one geographic destination and a map generator may automatically create an enhanced schematic destination map utilizing a hierarchy of road sets to provide at least one route including at least one road to the geographic destination.

Japanese Laid-Open Patent publication No. 2005-70482, published on March 17, 2005, discloses "DATA STRUCTURE OF MAP DATA, MAP DATA STORAGE MEDIUM, MAP DATA UPDATING METHOD, AND MAP INFORMATION PROCESSOR." It discloses independently separately managing node information and link information in order to make it easy to update map data.

As such, there is a need to provide a technology to rapidly present map data which is requested by a terminal of a user.

### Summary of the Invention

In view of the above, the present invention suggests a technology to rapidly provide map data which is requested by a terminal of a user.

In accordance with an embodiment of the present invention, there is provided a server for storing an indoor map, which includes: a first storage area configured to store network data, the network data including node data and link data that constitute a building; and a second storage area configured to store floor data, the floor data including space data representing logical division space for each floor and geometry data representing a physical separation space.

In the exemplary embodiment, wherein the first storage area is further configured to store time-constraint data having information about a restricted passage depending on the variation of time.

In the exemplary embodiment, wherein the second storage area is further configured to store 2D geometry data and 3D geometry data.

In the exemplary embodiment, the server further comprising: a third storage area configured to store the type of data that is stored in the first and second storage areas.

In the exemplary embodiment, wherein the third storage area is configured to store any one of a floor format version, network data version, plane spatial region including lower right information and lower left information having absolute coordinates of a polygon area corresponding to an indoor map region, minimum spatial region of data including information of the lowest floor of a building and a reference height of the building, POI ID, a network data frame offset indicating a value of locations where the network data is stored in the indoor map data or file, a network data frame in which attribute values of the network data is stored, data size, the number of floor data frames, a total data size of floor data frames, and a list of floor data frame offsets which are locations in data or file where each floor data is stored when the building has a plurality of floors.

In the exemplary embodiment, wherein the network data further includes a network data frame header and time-constraint detail data.

In the exemplary embodiment, wherein the network data frame header includes: a start offset of the node data indicative of location information in data or file, a data size of the node data, an start offset of the link data, a data size of the link data, a start offset of the time-constraint detail data, and a data size of the time-constraint detail.

In the exemplary embodiment, wherein the node data includes: a node data header, node data record columns, and connecting link data record columns.

In the exemplary embodiment, wherein the link data includes: a link data header, link data record columns, and a coordinate record column of interpolation point, which is a node formed at an intermediate of a link, except for both end nodes of the link.

In the exemplary embodiment, wherein the time-constraint detail data includes: a time-constraint detail header, record columns of time-constraint matching information which corresponds to matching information to connect a link ID and the time-constraint detail, and record columns of the time-constraint detail.

In the exemplary embodiment, wherein the space data includes: a space data header and space data record columns.

In the exemplary embodiment, wherein the 2D geometry data includes: a 2D geometry data header, 2D object index data which is record column in which an object is stored, and 2D space node data.

In the exemplary embodiment, wherein the 3D geometry data includes: a 3D geometry data header, 3D object index data which is record column in which an object is stored, and 3D space node data.

In accordance with an embodiment of the present invention, there is provided a server for storing an indoor map, wherein the indoor map comprises one file of the indoor map on a building basis, wherein the file is composed of a network data frame and a floor data frame, wherein the network data frame includes node data, link data, and time-constraint data, and wherein the floor data frame includes space data, 2D geometry data and 3D geometry data.

As set forth above, the embodiment of the present invention is configured to separately store network data and floor data that constitute buildings; therefore, it is possible to rapidly provide corresponding data, which is requested by a user terminal, in accordance with data types. The network data is delivered to the user terminal when the terminal requests the network data for a route search, and the floor data related to a particular floor of a building is delivered to the user terminal when the terminal requests the floor data related to the particular floor of a building.

### Brief Description of the Drawings

The above and other objects and features of the present invention will become apparent from the following description of the embodiments given in conjunction with the accompanying drawings, in which:
Fig. 1 shows a structure of a map data server in which map data is stored in a hierarchical fashion in accordance with an embodiment of the present invention;
Fig. 2 is a header of an indoor map file, which is made of one file, for a building in accordance with an embodiment of the present invention;
Fig. 3 shows a structure of a network data frame header constituting a network data frame;
Fig. 4 depicts information that is stored where each link has two or three time-constraint;
Fig. 5 illustrates a class of space types in accordance with an embodiment of the present invention;
Fig. 6 illustrates a class of object types in accordance with an embodiment of the present invention;
Fig. 7 illustrates 2D space geometry data records;
Fig. 8 illustrates name data records;
Fig. 9 shows a case where two spaces have four and three walls of 3D geometry data;
Fig. 10 illustrates a class of object types in accordance with an embodiment of the present invention;
Fig. 11 shows information included in 3D space node data;
Fig. 12 shows 3D space geometry data records; and
Fig. 13 shows a structure of a frame.

### Detailed Description of the Embodiments

The above described and additional aspects of the present invention will be further apparent from the preferred embodiments explained with reference to accompanying drawings. Hereinafter, these embodiments of the present invention will be described in detail so that they can be readily apprehended implemented by those skilled in the art.

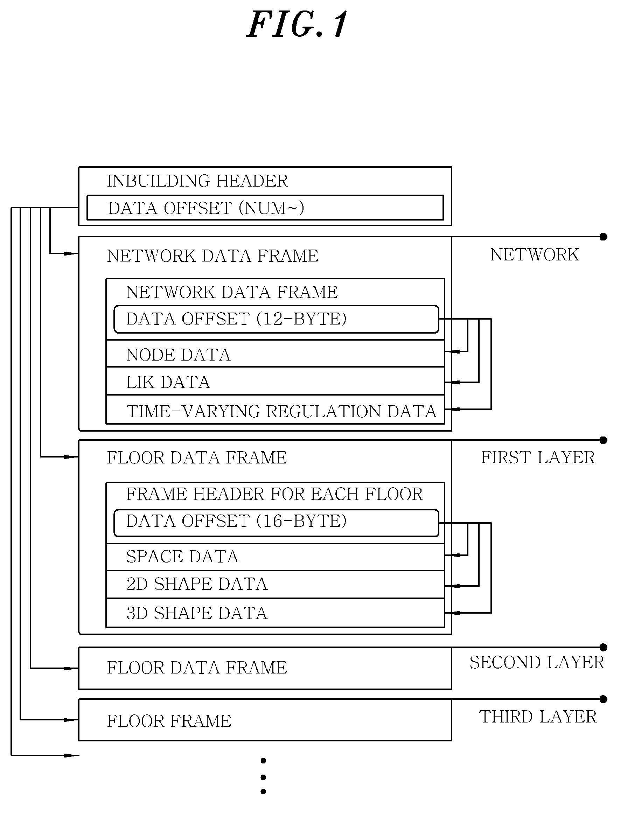

Fig. 1 shows a structure of a map data server in which map data is stored in accordance with an embodiment of the present invention. The structure of a map data server which stores map data will be discussed with reference Fig. 1.

Referring to Fig. 1, a map data server separately stores network map data and floor map data. The network map data is stored, e.g., in a first storage area, in the form of a network map data frame. The network map data frame is classified into a network map data frame header, node data, link data, and time-constraint data. The time-constraint data includes passage restriction information depending on a time.

The floor map data is stored, e.g., in a second storage area, which is different to the first storage area, in the form of a floor map data frame, and floor map data frame is classified into space data, 2D geometry data and 3D geometry data. The floor map data includes space data representing a space that are logically separated for each floor that make up a building and geometry data representing a map geometry. The space data may be spatial domain data that is logically divided depending on its intended use and may include data representing an area such as individual shops, meeting rooms, etc. and, in some cases, sub-spaces of a large space. For example, for a large bookstore space, the space data may be data representing the space areas that are divided by categories. Meanwhile, the geometry data may include points, polyline, polygons and the like and may be data that exhibits the geometry such as floor surfaces, walls, ceiling and the like on user terminals in 2D or 3D.

That is, a single building is constructed with one indoor map file, and the indoor map file is composed of the network map data and floor map data. The floor map data is divided into the space data, which is spatial domain attribute data, including logical spatial separation information and the geometry data that is used for the presentation thereof. Further, as illustrated in Fig. 1, the geometry data is separately stored 2D geometry data and 3D geometry data.

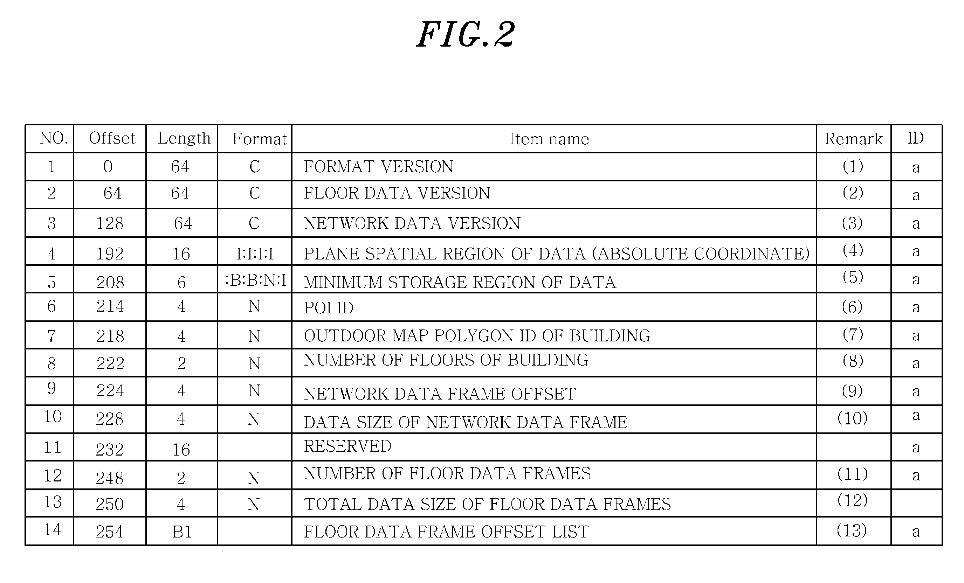

Fig. 2 shows a header of an indoor map file, which that may be made of a single file, for a building in accordance with an embodiment of the present invention. Hereinafter, the header of an indoor map file for a building that is constructed with a single file will be described in detail with reference to Fig. 2. The header may be stored in another storage area that is different from the first and second storage areas, as illustrated in Fig. 1.

Format version is individually denoted where a basic structure is changed or new concept is additionally introduced, where some of fields are changed or added in their definition or size as necessary, where an error on documents is corrected or some features are added using reserved regions, and the like.

Floor data version represents year of floor data generation, month of floor data generation, date of floor data generation, and time of floor data generation. Network data version represents year of network data generation, month of network data generation, date of network data generation, and time of network data generation.

Plane spatial region (absolute coordinate) of data stores spatial extent information as an absolute coordinate based on MBR (Minimum Bounding Rectangle) of a polygon area corresponding to an indoor map region. That is, the plane spatial region of data includes right top information and left bottom information having the absolute coordinates of the polygon area corresponding to the indoor map region.

The lowest spatial region of data stores a floor number of the lowest floor and a floor reference height of a building. POI ID is a representative POI ID of the building and is used whenever reading the POI information of the building. Outdoor map polygon ID of the building is a polygon ID of an outdoor map that matches to the building.

In addition to that, the header of an indoor map file includes the number of floors of the building; network data frame offset indicating an offset from the beginning of indoor map data in a service to a start point of network data frame; data size of network data frame; number of floor data frames indicating the number of floors, which is made of data for the map service, among a total number of floors of the building; Total Data Size of floor data frame; and floor data frame offset list. The floor data frame offset list is an offset from the beginning of the indoor map data in a service to a start point of the floor data frame.

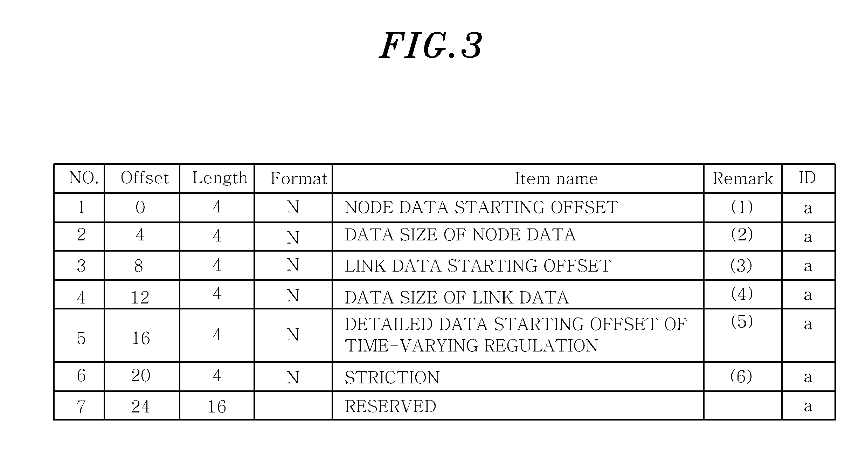

Fig. 3 illustrates the structure of the network data frame header constituting the network data frame. The network data frame header is a section of recording information about the network data frame.

A node data start offset is an offset from the beginning of the network data frame to the start point of node data. Data Size of node data is the data size by which the node data occupies in the network data frame. A link data start offset is an offset from the beginning of the network data frame to the start point of a data link. Data Size of link data is the data size by which the link data occupies in the network data frame. Detail data starting offset of time-constraint is an offset from the beginning of the network data frame to a start point of the time-constraint detail.

The node data is classified into a node data header, node data record columns, connecting link data record columns, of which detailed description will be made hereinafter.

The node data header is the header of an entire node data.

The node data records are as many as the number of nodes. Each of the node data includes a node ID, node coordinate information, floor number information to which a node belongs, a node type, and connecting link information. The node ID denotes an ID of the node; the node coordinates denotes X, Y and Z coordinates of the node, the floor number information to which the node belongs denotes a floor in which the node is included. The node type indicates whether the node represents a space, whether it represents a gate placed at the indoor, whether it represents an entrance that connects the indoor and the outdoor, whether it is an intersection node, and whether it is a firewall node.

Connecting link information can store up to a maximum of ten connecting links per one node wherein the connection links include two links in a vertical direction and eight links in a horizontal direction. The connection link information means the number of the connection links in a node and includes a start offset of a connection link data record of the node. The start offset of a connection link data record is an offset from the beginning of the node data to a start point of connection link data record columns that are connected to the node. Connection link record data of the node is sequentially stored as many as the number of connection links.

The connecting link data records are as many as the number of connecting links in all modes. In the storage order of the connecting link data record columns for each node, connecting link columns in the horizontal direction are stored first and then connecting link columns in the vertical direction are stored. The connecting link columns in the horizontal direction are stored in the clockwise direction relative to the true north, and the connecting link columns in the vertical direction are stored in the order of upward and downward directions. Each connecting link data record stores a reference link ID, a reference link data record index, presence or absence of a passage regulation, and a passage code.

The reference link ID is the ID of the link that serves as a reference of a passage code and the reference link data record index is an index value of the reference link data record. The presence or absence of passage regulation stores information of the presence or absence of a passage regulation, the passage code stores information about the passage regulation from one current link to another link. The passage code of 2-bit is assigned to each eight horizontal links and two vertical links. The passage regulation refers to the restriction to the passage of passing through the link to a target node. The passage regulation may be classified into permissible passage, conditional passage, and impermissible passage.

The link data includes a data link header, link data record columns, and interpolated point coordinate record columns. The link data header is a header for entire link data and includes the number of link data records. Each of the link data records includes link basic information, interpolation point information, a start node ID, an end node ID, a start node index, a link width, a link height, link passage information, time-constraint matching information of the link (i.e., matching information to connect the link ID and the time-constraint), a record start offset, and the number of the time-constraint that is set. In addition to two nodes of the both ends of the link, interpolation point information of the node, which is formed at the intermediate of the link, includes the number of interpolation points and a start offset of the interpolation point record. The start offset of the interpolation point record is an offset from the beginning of the link data to the start point of the interpolation point coordinate record column of the link. The start node ID/end node ID store IDs of the start node/end node that constitute the link. The start node/end node indexes store indexes of the start/end node data that constitute the link. The link width/height store the minimum height and minimum width of the area where the link exists. The link width/height is set to '0' in case where there is a difficulty of searching and configuring the values of the link width/height.

The link passage information includes one-way passage information, link facility type, presence or absence of permissible passage for a passage-restricted link, and presence or absence of permissible passage for equipments having wheels. The one-way passage information includes forward or reverse direction of the one-way passage, two-way passage, and uninvestigated passage. The presence or absence of permissible passage for passage-restricted link stores information as to whether the general public has permissible passage or impermissible passage. The presence or absence of permissible passage for equipments having wheels stores information as to whether or not stroller/wheelchair/cart/bike with wheels is permissible or impermissible to pass.

A start offset time-constraint matching information record of a link is an offset from the beginning of time-constraint detail data to the start point of time-constraint information matching record column of the link. When the number of the time-constraint is '0', the value of null is stored in the start offset of time-constraint matching information record of the link.

The interpolation point coordinate records are as many as the number of the interpolation points with respect to one link. Each interpolation point coordinate records including X, Y and Z coordinates for an interpolation point, and a minimum unit of the coordinates is set to 10cm.

The time-constraint detail data includes a time-constraint matching information header, time-constraint matching information header record columns and time-constraint detail record column. The time-constraint detail header includes the number of the time-constraint detail records and an start offset of the time-constraint detail records. A time-constraint matching information record is matching information to connect the link ID and the time-constraint detail and includes the link ID and a time-constraint detail record index.

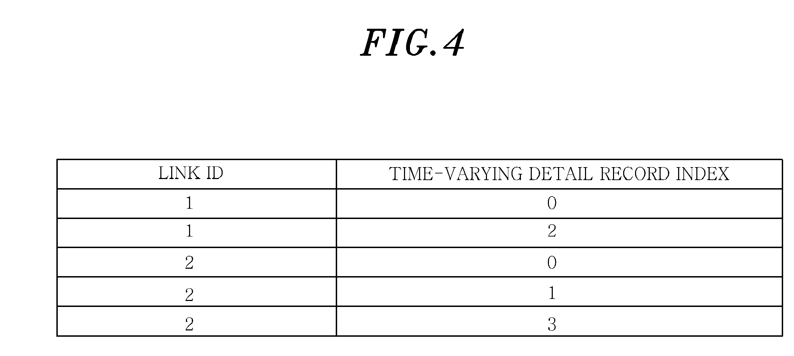

The link ID stores an ID of a link that serves as a reference, the time-constraint detail record index stores an index value of the time-constraint detail record, which is possessed by the link that serves as a reference. For example, when two links have two and three time-constraint, they are stored as illustrated in Fig. 4. In the case where several time-constraint exist in the same link, they are stored continuously; otherwise in the case where other links have the same time variation regulation, the links share the time-constraint detail record.

The time-constraint detail record includes time-constraint day information, time-constraint time zone information, and time-constraint minute zone information. The time-constraint day information indicates whether to regulate on a day-of-week basis; the time-constraint time zone information indicates whether to regulate on an hourly basis, and the time-constraint minute zone information indicates whether to regulate on a per-minute basis.

Hereinafter, the description with respect to a floor data frame will be made as follows. The number of Floor Data Frames is the same number of layers that are built with map. The Floor Data Frame Header includes floor information, a start offset of space data, a space data size, a start offset of 2D geometry data, a 2D geometry data size, a start offset of 3D geometry data, and a 3D geometry data size.

The floor information includes the reference height of a layer and the height of interlayer. The reference height of layer stores the reference height relative to the floor surface of the layer. If the exact value of the reference height of the layer is unknown, the reference height is stored by applying the reference height of an identical interlayer. The height of the interlayer stores the height of a layer on a basis of the floor surface of the layer. If the exact value of the height of the interlayer is unknown, the height of an identical interlayer is applied.

The start offset of data space is an offset from the beginning of the floor data frame to the start point of space data. The start offset of 2D geometry data is an offset from the beginning of the floor data frame to the start point of the 2D geometry data. The start offset of 3D geometry data is an offset from the beginning of the floor data frame to the start point of the 3D geometry data.

The space data includes a space data header and space data record columns. The space data header refers to the header of entire space data that make up one floor and includes the number of space data records of the floor.

Each of the space data records include a space ID, a space type, an index of representative node of a space, a POI ID, an offset of geometry data record, a data size of geometry data record, an offset of name data record, a data size of name data record, the number of wall geometries that make up the space, and an start offset of a wall geometry matching information record of the space.

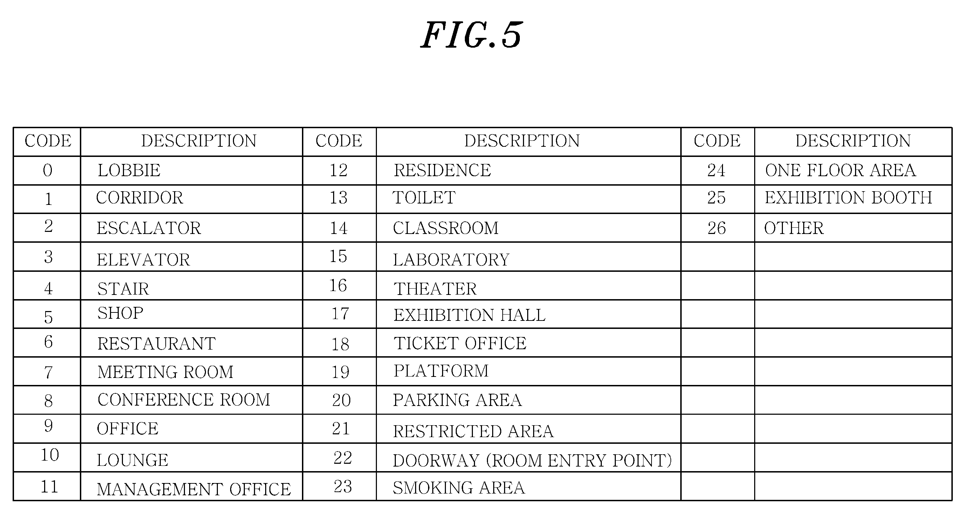

The space ID stores an ID of the space and the space type stores space types, as depicted in Figure 5. The index of representative node of the space stores an index of the node which represents the space. If there is no representative node of the space, null data is set in the index.

The POI ID stores an ID of an indoor POI corresponding to a space. If there is no ID of the indoor POI, null data is set as the POI ID. The offset of geometry data record is an offset from the beginning of 2D geometry data to the start point of 2D space geometry data record and the 2D space geometry data record is geometry data of the space. The data size of geometry data record stores the data size of 2D geometry data record. The offset of name data record is an offset from the beginning of 2D geometry data to the start point of name data record. The data size of name data record stores the data size of the name data record. The number of walls that make up the space stores the number of walls that enclose the space. If there are no walls enclosing the space, "0" is stored in the number of walls. The start offset of a wall geometry matching information record is an offset from the beginning of 3D geometry data to the start point of a wall geometry matching information record column of the space. If the number of wall geometries is '0', null value is stored in the number of wall geometries.

The geometry data utilizes the structure to store the space structure in a file format. One scene is composed of a header file that manages layer structures and a spatial node file in which index information of objects included in the layer and each object are represented in the spatially dispersed form. Finally, the geometry date also includes information (coordinates, color, indexes, etc.) about common objects entering each node.

The 2D geometry data stores geometry information of space data and the 2D geometry data header contains a layer name, a layer boundary box, an ID of a last layer object, a layer change time, and a layer color.

The layer name stores a layer name, the layer boundary box stores layer boundary boxes, the ID of last layer object stores a layer name, the layer change time stores the last change time of layer data, and the layer color stores the color of the layer.

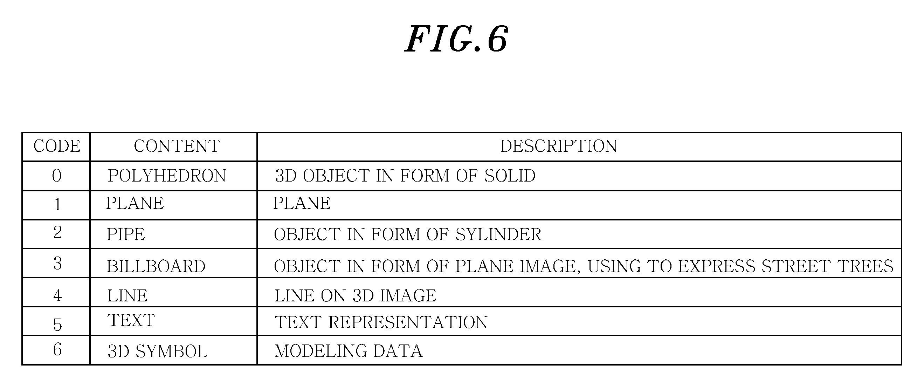

The 2D object index data includes an object key string, an object key, an object boundary box, a depth of a node to which an object belongs, an ID of node to which an object belongs. The 2D object index includes a record number in which an object is stored. The object key string stores the length of key object length, the key object stores an object key, and the object type stores a type of objects, as shown in Fig. 6.

The object boundary box stores the boundary coordinates of an object, the depth of a node to which an object belongs stores the depth of node to which the object belongs with the space division of the object, and the ID of node to which an object belongs stores an ID of node to which the object belongs.

The 2D space node data includes boundary box of a node, loose strength of node space division, child node length, a total number of entire objects in a node, map full size, map full depth, current depth of map, node ID, node boundary box, and data update time.

The boundary box of node stores boundary box coordinates of a space division node, the loose strength of node space division refers to a loose strength used to split a node and efficiency is low when a space is divided correctly. The child node length stores the length of a child node, the total number of entire objects in node stores the number of all objects contained in the node, map full size stores the map full size, the map full depth stores the full depth of nodes, the node current depth stores the depth of a current node, the node ID store an ID of the node, the node boundary box stores the boundary box coordinate of the node, and the data update time stores the update time of node data.

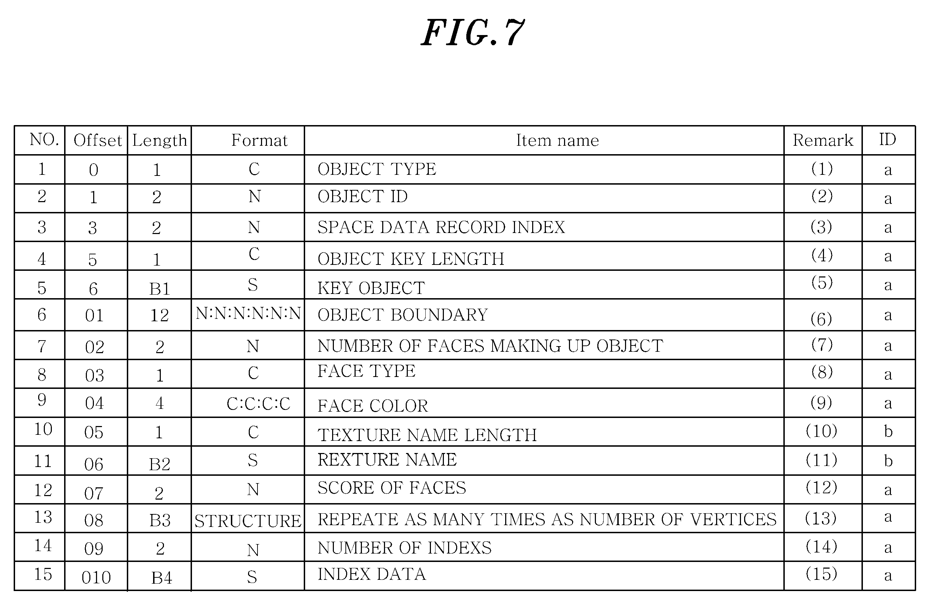

Fig. 7 shows 2D space geometry data record. an object type stores an object type, an object ID stores an ID of an object that represents a corresponding 2D space geometry, a space data record index stores an index of space data record having a corresponding 2D space geometry data, an object KEY length stores the length of object KEY, an object KEY stores an object KEY, an object boundary stores boundary box coordinates of an object, the number of faces that make up an object stores the number of faces that make up the object, a face type and a color store a face type and a color, respectively, a texture name length store a texture name, a face score stores the number of points that make up the face, the number of vertices stores the number of vertices that make up the face, the number of indexes stores the number of indexes for faces to be rendered on a screen, and index data stores index data.

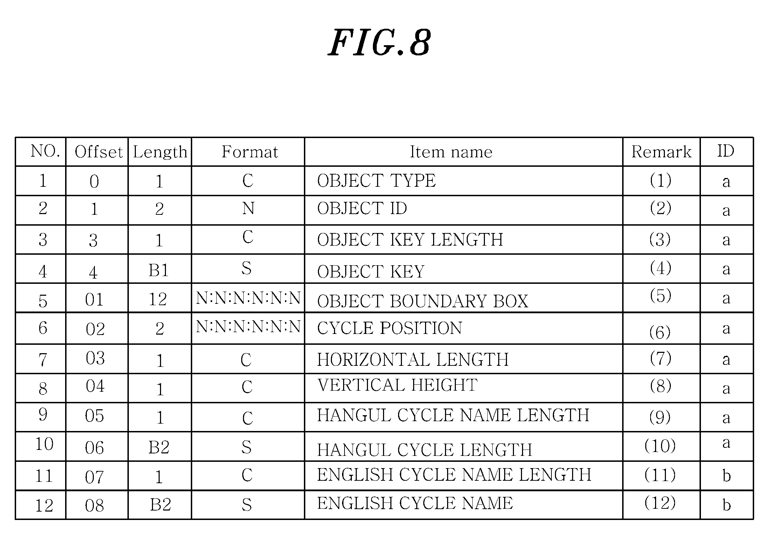

Fig. 8 shows name data records. An object Type stores an object type; an object ID stores a space ID; an object KEY length stores the length of an object KEY; an object boundary stores coordinates of a boundary box; and a name position stores coordinate of the name data; a horizontal length stores the length of the horizontal direction to express the name data; a vertical length stores the length of the vertical direction to express the name data; a Hangul title length stores the length of Korean alphabet; an English title length stores the length of English title; and an English title stores English title.

The 3D geometry data stores the rest of geometry data (e.g., walls, doors, etc) except for space geometry data (e.g., floor surface). The 3D geometry data header includes a layer name, a layer boundary box, an ID of last object layer, a layer change time, and a layer color. The layer name stores a layer name, the layer boundary box stores a layer boundary box, the ID of last layer object stores a layer name, the layer change time stores a last modification time of layer data, and the layer color stores the color of a layer.

The 3D geometry matching information records are matching information to connect the space ID and the 3D geometry data, which exist as many as the number of 3D geometry data (wall data), which is possessed by a space on a space basis. The 3D geometry matching information record contains space ID, 3D geometry data record start off, and a data size of 3D geometry data record.

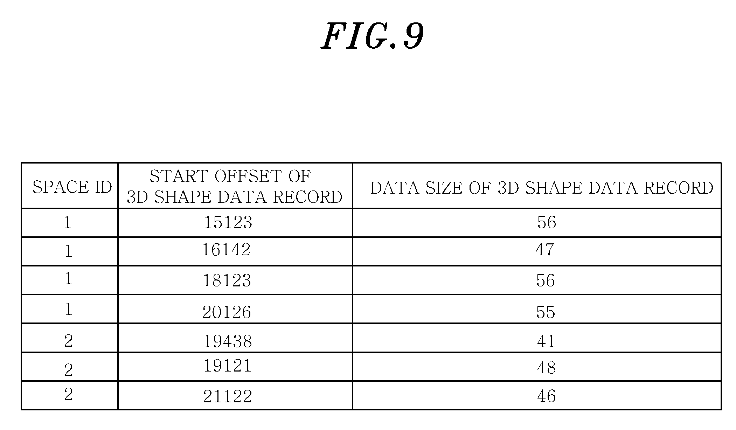

The space ID stores an ID of a space as a reference; the 3D geometry data record start offset store a starting offset of the 3D geometry data record, the data size of the 3D geometry data record stores data size of 3D geometry data record. When two spaces each have four and three 3D geometry data (walls) is expressed as in Fig. 9.

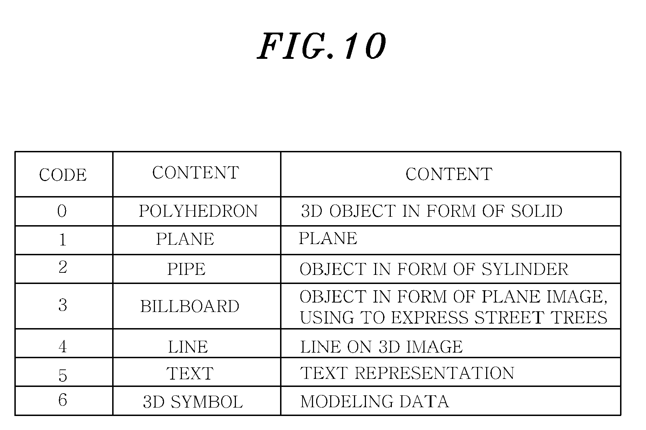

A 3D object index includes an object key string length, an object key, an object type, an object boundary box, a length of a node to which an object belongs, and an ID of anode to which an object belongs. The object key string length stores the string length of an object key, the object key stores an object key, the object type stores the type of the object as shown in Fig. 10.

The object boundary box stores the boundary coordinates of the object, the depth of the node to which an object belongs stores the depth of the node to which object belongs with the space division of the object, the ID of node to which an object belongs stores an ID of the node to which the object belongs.

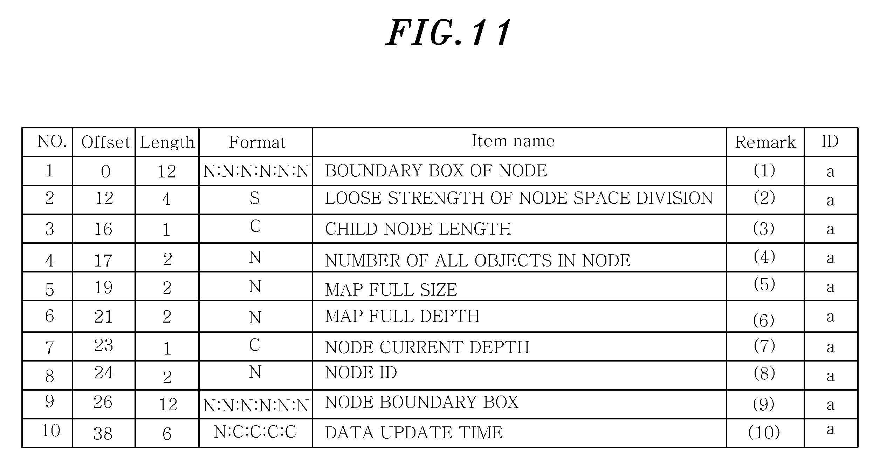

Fig. 11 illustrates information contained in the 3D space node data. A bounding box of node stores the coordinates of the bounding box of the space division node, a loose strength of node space division indicates a loose strength used to split the node, and efficiency is low when the space is divided correctly. A child node length stores the length of a child node; a total number of whole objects in the node stores the number of whole objects contained in the node; a map full size stores a map full size, a map full depth stores a full depth of nodes; a node current depth stores the depth of a current node; a node ID stores an ID of the node; a node boundary box stores the coordinates of boundary box coordinates of the node; and a data update time stores the update time of node data.

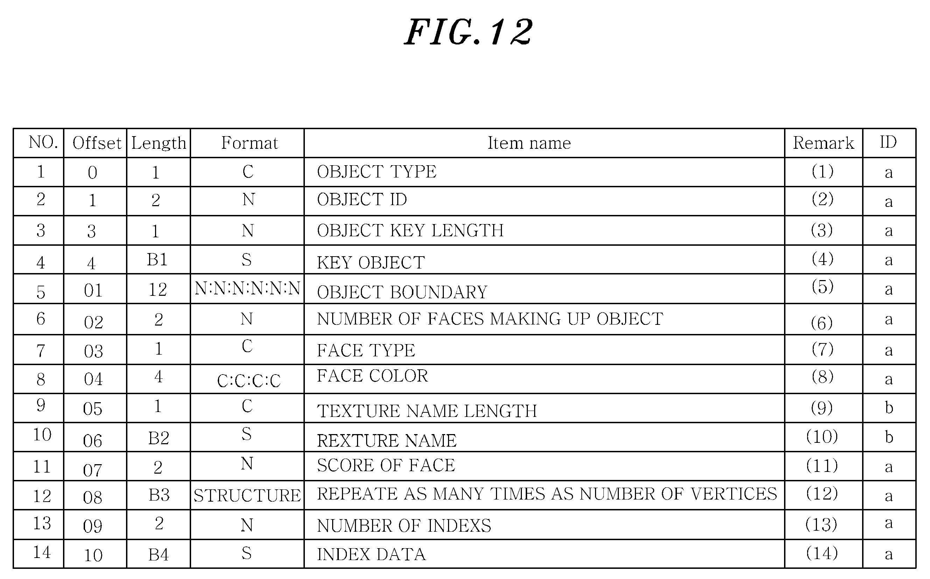

Fig. 12 illustrates 3D space geometry data records. An object type stores an object type, an object ID stores an object ID that represents the 2D space geometry, a space data record index stores an index of space data record having the 2D space geometry data, an object KEY length stores the length of an object KEY, an object KEY stores an object KEY, an object boundary stores boundary box coordinates of an object, the number of faces that make up an object stores the number of faces that make up the object, a face type and color stores a face type and color, a texture name length stores a texture name, a face score stores the number of points that make up the face, the number of vertices stores the number of vertices that make up the face, an index number stores the number of indexes for faces to be rendered on the screen, and an index data stores index data.

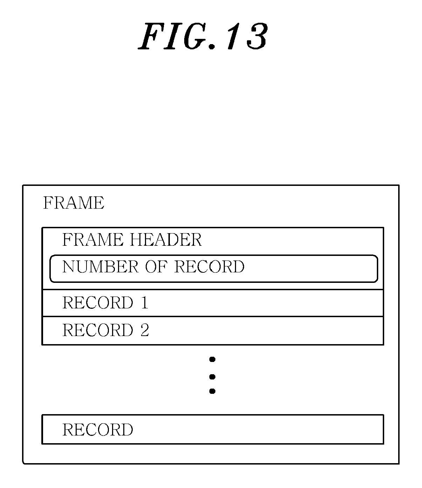

Fig. 13 illustrates the structure of the frame proposed by the embodiment of the present invention. As illustrated in Fig. 13, the frame includes a frame header, the number of records and information for each record.

While the present invention has been shown and described with respect to the preferred embodiments, the present invention is not necessarily limited thereto. It will be easily appreciated by those skilled in the art that various substitutions, changes and modifications may be made within a scope without departing from the technical idea of the invention.

## Claims

1. A server for storing an indoor map, the server comprising:
a first storage area configured to store network data, the network data including node data and link data that constitute a building; and
a second storage area configured to store floor data, the floor data including space data representing logical division space for each floor and geometry data representing a physical separation space.

2. The server of claim 1, wherein the first storage area is further configured to store time-constraint data having information about a restricted passage depending on the variation of time.

3. The server of claim 1, wherein the second storage area is futher configured to store 2D geometry data and 3D geometry data.

4. The server of claim 1, further comprising:
a third storage area configured to store the type of data that is stored in the first and second storage areas.

5. The server of claim 4, wherein the third storage area is configured to store any one of a floor format version, network data version, plane spatial region including lower right information and lower left information having absolute coordinates of a polygon area corresponding to an indoor map region, minimum spatial region of data including information of the lowest floor of a building and a reference height of the building, POI ID, a network data frame offset indicating a value of locations where the network data is stored in the indoor map data or file, a network data frame in which attribute values of the network data is stored, data size, the number of floor data frames, a total data size of floor data frames, and a list of floor data frame offsets which are locations in data or file where each floor data is stored when the building has a plurality of floors.

6. The server of claim 1, wherein the network data futher includes a network data frame header and time-constraint detail data.

7. The server of claim 6, wherein the network data frame header includes:
a start offset of the node data indicative of location information in data or file, a data size of the node data, an start offset of the link data, a data size of the link data, a start offset of the time-constraint detail data, and a data size of the time-constraint detail.

8. The server of claim 1, wherein the node data includes:
a node data header, node data record columns, and connecting link data record columns.

9. The server of claim 1, wherein the link data includes:
a link data header, link data record columns, and a coordinate record column of interpolation point, which is a node formed at an intermediate of a link, except for both end nodes of the link.

10. The server of claim 6, wherein the time-constraint detail data includes:
a time-constraint detail header, record columns of time-constraint matching information which corresponds to matching information to connect a link ID and the time-constraint detail, and record columns of the time-constraint detail.

11. The server of claim 1, wherein the space data includes:
a space data header and space data record columns.

12. The server of claim 6, wherein the 2D geometry data includes:
a 2D geometry data header, 2D object index data which is record column in which an object is stored, and 2D space node data.

13. The server of claim 6, wherein the 3D geometry data includes:
a 3D geometry data header, 3D object index data which is record column in which an object is stored, and 3D space node data.

14. A server for storing an indoor map, wherein the indoor map comprises one file of the indoor map on a building basis,
wherein the file is composed of a network data frame and a floor data frame,
wherein the network data frame includes node data, link data, and time-constraint data, and
wherein the floor data frame includes space data, 2D geometry data and 3D geometry data.
